# EUROPEAN PATENT APPLICATION

(11) **EP 2 177 642 A1**
(43) Date of publication of application: **21.04.2010**
(21) Application number: 08778366.8
(22) Date of filing: 29.07.2008
(51) Int. Cl.: C23C 2/12, C22C 21/02, C22C 38/00, C22C 38/38, C22C 38/58, C23C 2/20, F01N 7/16

(54) **AL-PLATED STEEL SHEET FOR EXHAUST GAS PASSAGEWAY MEMBERS OF MOTORCYCLES AND MEMBERS**

(30) Priority: 31.07.2007 JP 2007198898
(71) Applicant: NISSHIN STEEL CO., LTD., Chiyoda-ku Tokyo 100-8366 (JP)
(72) Inventor: HORI, Yoshiaki, Shunan-shi Yamaguchi 746-0023 (JP); NAKAMURA, Sadayuki, Shunan-shi Yamaguchi 746-0023 (JP); OKU, Manabu, Shunan-shi Yamaguchi 746-0023 (JP); UENO, Shin, Sakai-shi Osaka 592-8332 (JP); HATTORI, Yasunori, Sakai-shi Osaka 592-8332 (JP)
(74) Representative: Wagner, Karl H.
(86) International application number: PCT/JP2008/063938
(87) International publication number: WO 2009/017245

(57) **Abstract**

Provided is an Al-plated steel sheet for motorcycle exhaust gas passageway members excellent in red scale resistance, which is produced by dipping a substrate steel sheet comprising, in terms of % by mass, at most 0.02% of C, at most 1% of Si, at most 1% of Mn, from 5 to 25% of Cr, at most 0.3% of Ti, at most 0.02% of N, and optionally at least one of at most 0.6% of Ni, at most 0.1% of Nb, at most 0.2% of Al, at most 3% of Mo, at most 3% of Cu, at most 3% of W, at most 0.5% of V, at most 0.5% of Co and at most 0.01% of B, with a balance of Fe and inevitable impurities, in a hot-dip Al-base plating bath to thereby form a hot-dip plating layer having a mean thickness of from 3 to 20 µm on the surface thereof.

## Description

### TECHNICAL FIELD

The present invention relates to an aluminium-plated steel sheet excellent in red scale resistance for use in motorcycle engine exhaust gas passageway members (e.g., mufflers, catalyst carriers, exhaust pipes, etc.), and to a motorcycle exhaust gas passageway member comprising it.

### PRIOR ART

The engine exhaust gas passageway in motorcycles is shorter than that in four-wheel vehicles, and not unusually, even the downstream members such as mufflers and others may be often exposed to high temperatures not lower than 400°C. With recent reinforcement for exhaust gas regulation, an exhaust gas purification device comprising a ternary catalyst is being built also in motorcycles; and in motorcycles, the purification device is often incorporated in the muffler therein. Heat-resistant ferritic stainless steel such as SUH409L, SUS436 or the like is used for motorcycle exhaust gas passageway members from the viewpoint of heat resistance.

Exhaust gas passageway members comprising stainless steel may often have red-brown scale (hereinafter referred to as "red scale"). This is a phenomenon often occurring in a low-oxygen high-moisture atmosphere at an exhaust gas temperature of from 400 to 700°C. When red scale has formed and when it is mixed with dew condensation water, then it gives a red-brown liquid. The dew condensation water in an exhaust gas passageway may be discharged out through an exhaust port along with exhaust gas therethrough, but it is extremely unfavorable to discharge the above-mentioned red-brown liquid in the appearance.

Of exhaust gas passageway members, a muffler is a site where dew condensation water may readily remain. In ordinary four-wheel vehicles, the muffler is rarely exposed to exhaust gas at 400°C or higher, and the corrosion caused by internal dew condensation water is often problematic rather than the red scale to form inside the muffler. However, in motorcycles, even the muffler may be frequently exposed to 400°C or higher as so mentioned in the above, and therefore red scale forms inside the muffler and the release of a red-brown liquid caused by it is often problematic.

Patent Reference 1 discloses a technique of inhibiting red scale formation in stove combustion cylinders and others by previously forming a Cr oxide-base oxide film on the surface of the structure. However, the oxide film is poor in corrosion resistance and therefore requires a countermeasure to enhance the corrosion resistance of the steel base, which brings about the increase in the material cost. Accordingly, the technique is difficult to apply to exhaust gas passageway members. Patent References 2 and 3 disclose a technique of inhibiting red scale formation by the use of steel with much Al and Si added thereto. The shapability of such a high-Al, Si steel may be good as compared with that of SUH21 (18Cr-3Al steel of good scale resistance), but is much inferior to that of ferritic stainless steels such as SUH409L, SUS410L, SUS430LX and the like. Therefore, the technique is unsuitable to motorcycle exhaust gas passageway members.

On the other hand, Al-plated steel sheets of Cr-containing steel such as stainless steel or the like exhibit good oxidation resistance, and various types of such steel sheets have been developed for automobile exhaust system members (Patent References 4 to 13).
Patent Reference 1: JP-A 2001-240911
Patent Reference 2: JP-A 2001-316773
Patent Reference 3: JP-A 2003-160844
Patent Reference 4: JP-A 8-319543
Patent Reference 5: JP-A 5-112859
Patent Reference 6: JP-A 5-295513
Patent Reference 7: JP-A 61-147866
Patent Reference 8: JP-A 61-147865
Patent Reference 9: JP-A 7-233451
Patent Reference 10: JP-A 63-47356
Patent Reference 11: JP-A 3-277761
Patent Reference 12: JP-A 7-188887
Patent Reference 13: JP-A 8-325691

### PROBLEMS THAT THE INVENTION IS TO SOLVE

According to the present inventors' investigations, Al-plating is effective for enhancing the resistance to red scale formation (hereinafter referred to as "red scale resistance") of a Cr-containing steel sheet such as stainless steel or the like. However, the present inventors' further detailed investigations on the above-mentioned known Al-plated steel sheets have revealed that these have some problems to be solved in realizing their broad-range practicable application to motorcycle exhaust gas passageway members.

Specifically, in the Al-plated steel sheet in Patent Reference 4, Mn and the like is thickened in the alloy layer, and the plating layer thickness could not be said to be sufficiently thin, and therefore, it is recognized that the peeling resistance of the plating layer (in this description, a hot-dip plating layer including an alloy layer is referred to as "plating layer") is insufficient. In the plated steel sheets in Patent References 5 and 6, the plating layer is thick, and therefore also in these, the peeling resistance of the plating layer is insufficient. The plated steel sheets in Patent References 7, 8 and 10 are produced by Al plating after Ni pre-plating; however, the Ni pre-plating employed therein much increases the production costs and therefore could not be directly applied to exhaust gas passageway members such as mufflers, catalyst carriers and the like for which cost reduction is much desired. In these, in addition, the peeling resistance of the plating layer when heated up to a range of from 400 to 700°C is not always on a satisfactory level. In the plated steel sheet in Patent Reference 9, the substrate steel indispensably contains a rare earth element or Y added thereto, and is therefore protected from abnormal oxidation at a high temperature of from 1150 to 1250°C; however, when exposed to cycles of heating to a range of from 400 to 700°C followed by cooling, the plating layer tends to readily peel away. In the plated steel sheets in Patent References 11 and 12, the plating layer is not sufficiently thin, and therefore the peeling resistance of the plating layer to cycles of heating to a range of from 400 to 700°C followed by cooling is insufficient. "Red rust" described in Patent Reference 11 is typical red rust generally seen in ordinary steel that has been much corroded at room temperature, and this differs from "red scale" as referred to herein.

As in the above, basically in known Al-plated stainless steel sheets, the peeling resistance of the plating layer could not be said to be satisfactory when heated in a temperature range of from 400 to 700°C. Accordingly, when conventional Al-plated stainless steel sheets are applied to mufflers, catalyst carriers and the like in motorcycles that are used in a temperature range of from 400 to 700°C, they could exhibit good corrosion resistance and red scale resistance in the early days; however, while used for a long period of time, the plating layer may peel away, therefore causing reduction in the corrosion resistance and reduction in the red scale resistance of the steel sheets. In other words, they involve some risk factors in point of the durability thereof. On the other hand, the steel sheets for exhaust gas members are required to have good shapability and low-temperature toughness. In addition, low-cost production is an important factor for industrial applicability.

An object of the present invention is to provide an Al-plated steel sheet for motorcycle exhaust gas passageway members, which is inexpensive and is excellent in red scale resistance, shapability and low-temperature toughness and in which the peeling resistance of the plating layer in repeated heating in a temperature range of from 400 to 700°C has been significantly enhanced.

### MEANS FOR SOLVING THE PROBLEMS

As a result of detailed investigations, the present inventors have found that, when the thickness of the Al-base plating layer is controlled to be at most 20 µm, then the peeling resistance of the Al-base plating layer can be significantly enhanced, and have completed the present invention.

Specifically, the invention provides an Al-plated steel sheet for motorcycle exhaust gas passageway members excellent in red scale resistance, which is produced by dipping a substrate steel sheet having a base steel composition comprising, in terms of % by mass, at most 0.02% of C, at most 1% of Si, at most 1% of Mn, from 5 to 25% of Cr, at most 0.3% of Ti, at most 0.02% of N, and optionally at least one of at most 0.6% of Ni, at most 0.1% of Nb, at most 0.2% of Al, at most 3% of Mo, at most 3% of Cu, at most 3% of W, at most 0.5% of V, at most 0.5% of Co, at most 0.01% of B, with a balance of Fe and inevitable impurities,
in a hot-dip plating bath containing, in terms of % by mass, from 3 to.12% of Si and optionally at least one of Ti, B, Sr, Cr, Mg and Zr in a total amount of at most 1%, with a balance of Al and inevitable impurities, then pulling it up, and controlling the plating amount to thereby form a plating layer having a mean thickness of from 3 to 20 µm on the surface thereof.

The invention also provides a motorcycle exhaust gas passageway member which is formed of the above-mentioned plated steel sheet and which is so designed that the above-mentioned plating layer thereof is kept in contact with exhaust gas and that the maximum service temperature is 400°C or higher.

The Al-plated steel sheet of the invention is excellent in red scale resistance and is excellent in peeling resistance of the plating layer in repeated heating in a temperature range of from 400 to 700°C, and therefore, it is favorable for motorcycle exhaust gas passageway members (e.g., muffler members) that are used in an environment where red scale readily forms in heating in that temperature range. In addition, the production costs may be reduced to at most the same level as that for ordinary Al-plated stainless steel sheets. Accordingly, the invention may contribute toward improving and enhancing the quality and the durability of motorcycle exhaust gas passageway members.

### PREFERRED EMBODIMENTS OF THE INVENTION

When a high-Cr steel such as ferritic stainless steel or the like is heated at a high temperature, in general, an oxide having a high Cr concentration (Cr-base oxide) is formed in the surface of the steel base. Since the Cr-base oxide has a high protecting capability, the high-Cr steel may generally have good high-temperature oxidation resistance as compared with low-Cr steel. However, it is known that, when heated in a low-oxygen high-moisture atmosphere in a temperature range of from 400 to 700°C, even such a high-Cr steel readily forms an Fe-base oxide rather than a Cr-base oxide in the initial stage of the oxidation process thereof. This is considered because Cr could not rapidly diffuse in the surface of the steel base in an amount enough to cover the surface in the form of the Cr-base oxide thereof but rather Fe existing in a large amount in the surface would be predominantly oxidized in the low-oxygen high-moisture atmosphere. Red scale is composed of the oxide having a high Fe concentration formed in the surface in the manner as above.

For preventing the red scale formation, the Fe-base oxide may be prevented from forming in the surface of the steel base in the atmosphere and the temperature range mentioned above. As one means for it, Al-base plating may be effective. In this case, Al in the surface of the plating layer may be rapidly oxidized, and the surface of the steel sheet may be covered with the Al-base oxide film.

However, the present inventors' investigations have revealed that the Al-base plating layer may readily peel off from the surface of the steel base in repeated cycles of heating up to a temperature of from 400 to 700°C followed by cooling. This is a significant risk factor of not always exhibiting good durability in application of conventional Al-plated steel sheets to motorcycle muffler members or the like. When a hot-dip Al-plated steel sheet is heated at 400 to 700°C, Al in the plating layer and Fe in the steel base interdiffuse to give an Fe-Al intermetallic compound layer, and the intermetallic compound layer peels off from the steel base. In that manner, the plating layer peels off from the steel base, from which red scale begins to newly form.

The present inventors have made detailed studies about the method of preventing the plating layer from peeling off from the Al-plated steel sheet. As a result, the inventors have found that reducing the thickness of the Al-base plating layer is extremely effective for preventing the Al-base plating layer from peeling off from the steel base in heating in a low-oxygen high-moisture atmosphere in a temperature range of from 400 to 700°C. In this case, there is no necessity of providing any specific limitation on the chemical composition of the base steel sheet, on the composition and the texture condition of the Al-base plating layer and on the composition of the alloy layer.

### [Thickness of Al-base Plating Layer]

Concretely, in the hot-dip Al-plated steel sheet, the mean thickness of the Al-base plating layer is defined to be at most 20 µm per one surface, whereby the plating layer can exhibit excellent peeling resistance. The mean thickness of the Al-base plating layer is the thickness including no alloy layer. As well known, the hot-dip plating amount can be controlled according to a gas wiping method or the like, and therefore, in case where the plating amount itself per one surface is controlled to be at most 20 µm, then a part thereof could react with the steel base to form an alloy layer, and the mean thickness of the formed Al-base plating layer is not more than 20 µm. Under the operation condition under which a relatively thick alloy layer could be formed, the mean thickness of the plating layer could be at most 20 µm as the case may be, even when the plating amount is set to be somewhat larger than 20 µm. When the mean thickness of the Al-base plating layer is less than 15 µm, then the peeling resistance may be better further more. Accordingly, a case where the mean thickness of the Al-base plating layer per one surface is less than 15 µm is an especially preferred embodiment of the invention.

On the other hand, from the viewpoint of preventing red scale, the thickness of the Al-base plating layer is preferably larger. As a result of various investigations, the mean thickness of the Al-base plating layer per one surface must be at least 3 µm on the precondition of using a base steel sheet having a controlled composition as described below. When the plating layer is thinner than the range, it may be difficult to stably prevent the red scale formation. More preferably, the mean thickness is at least 4 µm, even more preferably at least 5 µm.

### [Thickness of Alloy Layer]

The alloy layer is relatively more brittle as compared with the steel base and the plating layer. Accordingly, the thickness of the alloy layer is preferably thinner in consideration of the workability of the plated steel sheet. Any specific consideration may be unnecessary for use of the plated steel for low working ratio members; however, when the plated steel sheet is severely deformed, then the mean thickness of the alloy layer per one surface is preferably at most 5 µm, more preferably at most 4 µm. In a hot-dip Al-base plating line using a gas-wiping method, it is well possible to produce plated steel sheets having such a thin alloy layer. Regarding the total thickness of the plating layer and the alloy layer, the thickness of the alloy layer is preferably so controlled that the "mean thickness of the Al-base plating layer + mean thickness of the alloy layer" per one surface could be at most 24 µm.

### [Composition of Al-base Plating Bath]

In an Al-Si alloy system, the liquidus-line temperature lowers with addition of Si to Al, and the system may have an eutectic composition when the Si content thereof reaches about 12% by mass. In the invention, a hot-dip Al-base plating bath containing Si in an amount of at least 3% by mass is used. An Al-richer composition than those of the bath will need a higher bath temperature, and in such a plating bath, it may be difficult to control the mean thickness of the alloy layer to be thin (for example, at most 5 µm). In addition, the increase in the bath temperature may cause the increase in the production cost. However, when the Si content is more than 12% by mass, then the workability of the Al-base plating layer itself may worsen, therefore often bringing about a problem. Accordingly, in the invention, a hot-dip Al-base plating bath that contains from 3 to 12% by mass of Si is used to produce the intended plated steel sheet.

The Al-base plating bath may contain at least one of Ti, B, Sr, Cr, Mg and Zr in a total amount of at most 1%. In addition, the bath may contain Fe as an inevitable impurity, in which Fe is allowable within a range of at most 2.5% by mass.

### [Substrate Steel Sheet]

The substrate steel sheet to be plated is a high-Cr steel sheet containing from 5 to 25% by mass of Cr. Since the corrosion resistance and the oxidation resistance of the steel sheet could be enhanced by Al-plating, the substrate steel sheet is not always required to have a Cr content on a level of stainless steel; however, in order that the plated steel sheet could secure the necessary corrosion resistance and red scale resistance for motorcycle exhaust gas passageway members that are exposed to an environment where they are kept in contact with dew condensation water and water vapor therein, the substrate steel sheet must have a Cr content of at least 5% by mass. More preferably, the Cr content is at least 10% by mass. With the increase in the Cr content, the corrosion resistance and the heat resistance of the steel sheet may better; however, too much Cr existing in the steel sheet is uneconomical and may cause a factor of interfering the shapability and the low-temperature toughness of steel. Accordingly, the Cr content of the substrate steel sheet is defined to fall within a range of at most 25% by mass.

Ti is an element effective for fixing C and N in steel and for stabilizing the ferrite phase and further for enhancing the low-temperature toughness and the shapability of steel. In order to make the element fully exhibit these effects thereof, preferably the Ti content is at least 0.05% by mass, more preferably at least 0.1% by mass. However, too much Ti may harden steel and therefore may rather worsen the workability and the low-temperature toughness of steel. Accordingly, the Ti content is limited to fall within a range of at most 0.3% by mass, and more preferably, it is within a range of at most 0.2% by mass.

C, Si, Mn and N are basic elements in steel; and their content may be as follows: C is at most 0.02%, Si is at most 1 %, Mn is at most 1%, and N is at most 0.02%. As other elements, the substrate steel may contain at least one of at most 0.6% of Ni, at most 0.1% of Nb, at most 0.2% of Al, at most 3% of Mo, at most 3% of Cu, at most 3% of W, at most 0.5% of V, at most 0.5% of Co and at most 0.01% of B; however, when the content of these elements is more than the above-mentioned limitation, then they may have some negative influences on the shapability and the low-temperature toughness of steel. As inevitable impurities, P may be allowable in an amount of at most 0.04% by mass or so, and S may be in an amount of at most 0.03% by mass or so.

### [Production Method]

The substrate steel sheet may be produced according to an ordinary steel sheet production process, and the production method for it is not specifically defined. For examples, pickling-finished cold-rolled steel sheet may be used as the substrate; and while the surface of the substrate steel sheet is kept activated, the sheet is dipped in a hot-dip Al-base plating bath and then pulling it up, and the plating amount is controlled to produce the hot-dip Al-plated steel sheet of the invention. For enhancing the platability thereof, an Fe pre-plated substrate steel sheet may be employed. A strip of the substrate steel sheet is introduced into a continuous hot-dip plating line, and a hot-dip Al-plated steel sheet of high quality can be thereby produced stably in a mode of industrial-scale mass production. Regarding the plating condition, it is important that the line speed and the wiping condition are so controlled that the mean thickness of the plating layer could be at most 20 µm per one surface; but for the others, ordinary conditions may be employed. Thus obtained, the plated steel sheet may be processed in a predetermined shaping and deforming process to give exhaust gas passageway members for motorcycles. For some members, the sheet may be welded into pipes and then shaped and deformed.

### EXAMPLES

Ferritic steels each having the composition shown in Table 1 were produced through melting, and then processed according to an ordinary method to give cold-rolled annealed steel sheets (pickling-finished steel sheets) having a thickness of 1.2 mm. As the inevitable impurities in all these steels, P was at most 0.04% by mass and S was at most 0.01% by mass. These steel sheets were used as substrates, and variously plated in a mode of hot-dip Al-base plating. In Nos. 19 and 29, the surface of the cold-rolled annealed steel sheet was pre-plated with Fe (2 g/m²), and these were used as substrates. In all Examples, the plating bath contained an inevitable impurity Fe in an amount of 1.7% by mass or so. The cross section of the obtained, hot-dip Al-plated steel sheet (sample sheet) was observed with SEM (scanning electronic microscope), and the mean thickness of the Al-base plating layer was determined. On that occasion, the mean thickness of the alloy layer was also determined, and as a result, it was at most 4 µm in all cases except some comparative examples.

**Table 1**

| Classification | Steel Code | Chemical Composition (% by mass) | | | | | | | | | | | | | | |
|---|---|---|---|---|---|---|---|---|---|---|---|---|---|---|---|---|
| | | C | Si | Mn | Ni | Cr | Nb | Ti | Al | N | Mo | Cu | W | V | Co | B |
| Steel of the invention | A1 | 0.006 | 0.10 | 0.18 | 0.14 | 17.49 | 0.01 | 0.25 | 0.08 | 0.012 | - | - | - | - | - | - |
| | A2 | 0.007 | 0.57 | 0.20 | 0.12 | 11.15 | - | 0.19 | 0.04 | 0.008 | - | - | - | - | - | - |
| | A3 | 0.005 | 0.32 | 0.15 | 0.11 | 11.09 | 0.04 | 0.29 | 0.03 | 0.010 | 0.15 | 0.08 | - | 0.02 | - | - |
| | A4 | 0.008 | 0.20 | 0.16 | 0.13 | 24.90 | 0.02 | 0.28 | 0.09 | 0.010 | - | 0.10 | - | - | - | - |
| | A5 | 0.009 | 0.95 | 0.98 | - | 5.90 | 0.03 | 0.15 | 0.02 | 0.009 | 0.25 | 0.07 | - | 0.02 | - | - |
| | A6 | 0.019 | 0.35 | 0.25 | 0.43 | 16.57 | 0.09 | 0.25 | 0.07 | 0.015 | - | - | - | 0.08 | - | - |
| | A7 | 0.009 | 0.92 | 0.45 | 0.58 | 18.30 | 0.06 | 0.10 | 0.09 | 0.010 | 0.20 | 0.15 | - | 0.09 | - | - |
| | A8 | 0.007 | 0.21 | 0.30 | 0.25 | 12.55 | 0.03 | 0.18 | 0.19 | 0.019 | 0.35 | 0.25 | - | 0.04 | - | - |
| | A9 | 0.010 | 0.30 | 0.35 | 0.30 | 13.90 | 0.03 | 0.20 | 0.07 | 0.009 | 2.89 | - | - | 0.03 | - | - |
| | A10 | 0.008 | 0.25 | 0.25 | 0.28 | 16.20 | 0.07 | 0.10 | 0.04 | 0.010 | 0.15 | 2.93 | - | - | - | - |
| | A11 | 0.006 | 0.35 | 0.62 | - | 17.55 | 0.06 | 0.18 | - | 0.011 | 0.20 | 0.06 | 2.87 | 0.01 | - | - |
| | A12 | 0.011 | 0.81 | 0.38 | 0.15 | 11.98 | 0.05 | 0.15 | 0.03 | 0.015 | - | - | - | 0.49 | - | - |
| | A13 | 0.015 | 0.45 | 0.45 | 0.35 | 12.10 | 0.02 | 0.22 | - | 0.009 | 0.09 | 0.15 | - | 0.07 | 0.47 | - |
| | A14 | 0.018 | 0.19 | 0.16 | 0.38 | 17.80 | - | 0.21 | 0.06 | 0.007 | 0.10 | 0.20 | - | 0.06 | - | 0.0090 |
| | A15 | 0.007 | 0.11 | 0.17 | - | 17.01 | - | 0.20 | - | 0.010 | - | - | - | - | - | - |
| Comparative Steel | B1 | 0.009 | 0.20 | 0.60 | 0.15 | 17.00 | 0.05 | 0.45 | 0.04 | 0.009 | 0.10 | 0.10 | - | 0.07 | - | - |
| | B2 | 0.010 | 0.40 | 0.55 | 0.20 | 26.10 | 0.03 | 0.19 | 0.03 | 0.008 | 0.12 | 0.10 | - | 0.09 | - | - |
| | B3 | 0.007 | 0.33 | 0.30 | 0.24 | 16.20 | 0.25 | 0.20 | 0.04 | 0.010 | 3.24 | 0.13 | - | 0.04 | - | - |
| | B4 | 0.005 | 1.20 | 1.11 | 0.13 | 17.54 | 0.01 | 0.22 | 0.02 | 0.011 | 1.52 | 0.20 | - | 0.03 | - | - |
| | B5 | 0.015 | 0.25 | 0.22 | 0.55 | 4.60 | 0.03 | 0.16 | 0.02 | 0.009 | 0.09 | 1.51 | - | 0.06 | - | - |
| | B6 | 0.008 | 0.24 | 0.10 | 0.25 | 16.34 | 0.04 | 0.20 | 0.04 | 0.015 | 0.16 | 3.55 | - | 0.07 | - | - |

| | | | | | | | | | | | | | | | | |
|---|---|---|---|---|---|---|---|---|---|---|---|---|---|---|---|---|
| Underlines: falling outside the scope of the invention. | | | | | | | | | | | | | | | | |

The sample sheets were evaluated for the red scale resistance, the peeling resistance of the plating layer, the shapability and the low-temperature toughness in the manner mentioned below.

### [Red Scale Resistance]

A test piece of 25 mm × 35 mm was cut out of the sample sheet; and this was tested in the following two heating modes of oxidation test. In every test mode, the number of the test pieces was n = 3.
• Continuous heating: In a nitrogen atmosphere having a dew point of 80°C, the test piece is continuously heated at 600°C for 100 hours.
• Cycle heating: "Heating in a nitrogen atmosphere having a dew point of 80°C, at 600°C for 30 minutes (in which the soaking time is 25 minutes) → cooling in air for 5 minutes" is one cycle; and the test piece is exposed to 500 cycles.

After tested in each heating mode, the test piece was visually checked for the presence or absence of red-brown coloration therein. In addition, the oxidation weight increase and the oxidation weight reduction (scale peel loss) were measured. All the test pieces of n = 3 were tested in the manner as above, and those having cleared the three requirements of (i) presence of no red-brown coloration, (ii) oxidation weight increase of less than 0.2 mg/cm², and (iii) oxidation weight reduction of less than 0.2 mg/cm² were evaluated as good (○) and the others were as not good (×).

### [Peeling Resistance of Plating Layer]

A test piece of 25 mm × 35 mm was cut out of the sample sheet; and this was tested in a mode of 600°C cycle heating and 700°C cycle heating as mentioned below. In every test mode, the number of the test pieces was n = 5.
• 600°C cycle heating: "Heating in a nitrogen atmosphere having a dew point of 80°C, at 600°C for 30 minutes (in which the soaking time is 25 minutes → cooling in air for 5 minutes" is one cycle; and the test piece is exposed to 1000 cycles.
• 700°C cycle heating: "Heating in a nitrogen atmosphere having a dew point of 80°C, at 700°C for 30 minutes (in which the soaking time is 25 minutes) → cooling in air for 5 minutes" is one cycle; and the test piece is exposed to 1000 cycles.

After tested at the predetermined temperature, the test piece was visually checked for the presence or absence of peeling of the plating layer. Of all the test pieces of 5 at different temperatures (n = 5) × two-level temperatures, totaling 10, tested in the manner as above, those with no peeling of the plating layer were evaluated as good (○) and the others were as not good (×).

The test pieces evaluated as good (○) in the above-mentioned 1000-cycle tests were further tested up to 2000 cycles of 600°C cycle heating and 700°C cycle heating. Of all the test pieces of 5 at different temperatures (n = 5) × two-level temperatures, totaling 10, tested in the manner as above, those with no peeling of the plating layer were evaluated as very good (Θ).

### [Shapability]

A tensile test piece (JIS 13B) was cut out of the sample sheet (hot-dip Al-plated steel sheet having a thickness of 1.2 mm) in such a manner that its lengthwise direction could be the rolling direction of the sheet; and the test pieces of n = 3 were tested for elongation in a tensile test according to JIS Z2241. The data of the elongation of the test pieces of n = 3 were averaged to give the mean elongation of the sample sheet. From various experiments, it is known that, when a steel sheet having a thickness of 1.2 mm could have an elongation of at least 30 %, then it may satisfy the necessary shapability in forming it into motorcycle exhaust gas passageway members. Accordingly, the sample sheets having an elongation of at least 30 % were evaluated as good (○) and the others were as not good (×).

### [Low-Temperature Toughness]

A test piece of 55 mm × 10 mm was cut out of the sample sheet (hot-dip Al-plated steel sheet having a thickness of 1.2 mm) in such a manner that its lengthwise direction could be perpendicular to the rolling direction of the sheet, and its center was notched to have a 2-mm V-notch, thereby preparing a notched impact test piece. According to the definition by JIS Z2202, the height is 10 mm, the width is 1.2 mm, the length is 55 mm and the height below the notch is 8 mm. The test pieces were tested in a Charpy impact test according to JIS Z2242; and those determined to have a nil ductility temperature (a brittle fracture occurrence temperature) of not higher than -75°C were evaluated as good (○), and the others were as not good (×)

These results are shown in Table 2 and Table 3.

**Table 2**

| Classification | Sample No. | Steel Code | Plating Bath Composition (% by mass) | | | Mean Thickness of Plating Layer (µm) | Red Scale Resistance | | Plating Layer Peeling Resistance | Shapability | Low-Temperature Toughness |
|---|---|---|---|---|---|---|---|---|---|---|---|
| | | | Al | Si | Others | | continuous heating | cycle hearing | | | |
| | 1 | A1 | balance | 9.0 | - | 4.5 | ○ | ○ | Θ | ○ | ○ |
| | 2 | A1 | balance | 8.8 | Ti:0.16 | 20 | ○ | ○ | ○ | ○ | ○ |
| | 3 | A1 | balance | 8.8 | Ti:0.16 | 13 | ○ | ○ | Θ | ○ | ○ |
| | 4 | A1 | balance | 3.2 | - | 12 | ○ | ○ | Θ | ○ | ○ |
| | 5 | A1 | balance | 9.0 | Sr0.5 | 18 | ○ | ○ | ○ | ○ | ○ |
| | 6 | A1 | balance | 9.0 | Sr0.5 | 10 | ○ | ○ | Θ | ○ | ○ |
| | 7 | A1 | balance | 9.0 | - | 20 | ○ | ○ | ○ | ○ | ○ |
| | 8 | A1 | balance | 8.8 | B:0.12 | 14 | ○ | ○ | Θ | ○ | ○ |
| | 9 | A1 | balance | 7.5 | - | 12 | ○ | ○ | Θ | ○ | ○ |
| | 10 | A1 | balance | 8.2 | Co:0.15 | 10 | ○ | ○ | Θ | ○ | ○ |
| | 11 | A2 | balance | 9.0 | - | 5.2 | ○ | ○ | Θ | ○ | ○ |
| | 12 | A2 | balance | 8.2 | Cr.0.13 | 9.1 | ○ | ○ | Θ | ○ | ○ |
| | 13 | A2 | balance | 11.0 | - | 14 | ○ | ○ | Θ | ○ | ○ |
| | 14 | A2 | balance | 8.7 | Mg:0.15 | 18 | ○ | ○ | ○ | ○ | ○ |
| | 15 | A2 | balance | 8.7 | Mg:0.15 | 12 | ○ | ○ | Θ | ○ | ○ |
| | 16 | A2 | balance | 9.0 | - | 20 | ○ | ○ | ○ | ○ | ○ |
| | 17 | A2 | balance | 8.0 | B:0.10 | 13 | ○ | ○ | Θ | ○ | ○ |
| Example of the Invention | 18 | A2 | balance | 8.2 | Zr:0.4 | 10 | ○ | ○ | Θ | ○ | ○ |
| | 19 | A3 | balance | 9.0 | - | 8.6 | ○ | ○ | ○ | ○ | ○ |
| | 20 | A4 | balance | 9.0 | - | 18 | ○ | ○ | ○ | ○ | ○ |
| | 21 | A4 | balance | 9.0 | - | 11 | ○ | ○ | Θ | ○ | ○ |
| | 22 | A5 | balance | 9.0 | - | 5.2 | ○ | ○ | Θ | ○ | ○ |
| | 23 | A6 | balance | 9.0 | - | 18 | ○ | ○ | ○ | ○ | ○ |
| | 24 | A6 | balance | 9.0 | - | 9.5 | ○ | ○ | Θ | ○ | ○ |
| | 25 | A7 | balance | 9.0 | - | 20 | ○ | ○ | ○ | ○ | ○ |
| | 26 | A7 | balance | 9.0 | - | 12 | ○ | ○ | Θ | ○ | ○ |
| | 27 | A8 | balance | 9.0 | - | 16 | ○ | ○ | ○ | ○ | ○ |
| | 28 | A8 | balance | 9.0 | - | 8.2 | ○ | ○ | Θ | ○ | ○ |
| | 29 | A9 | balance | 9.0 | - | 14 | ○ | ○ | Θ | ○ | ○ |
| | 30 | A10 | balance | 9.0 | - | 15 | ○ | ○ | ○ | ○ | ○ |
| | 31 | A10 | balance | 9.0 | - | 7.5 | ○ | ○ | Θ | ○ | ○ |
| | 32 | A11 | balance | 9.0 | - | 4.8 | ○ | ○ | Θ | ○ | ○ |
| | 33 | A12 | balance | 9.0 | - | 3.2 | ○ | ○ | Θ | ○ | ○ |
| | 34 | A13 | balance | 9.0 | - | 14 | ○ | ○ | Θ | ○ | ○ |
| | 35 | A14 | balance | 9.0 | - | 17 | ○ | ○ | ○ | ○ | ○ |
| | 36 | A14 | balance | 9.0 | - | 11 | ○ | ○ | Θ | ○ | ○ |
| | 37 | A15 | balance | 9.0 | - | 12 | ○ | ○ | Θ | ○ | ○ |

**Table 3**

| Classification | Sample No. | Steel Code | Plating Bath Composition (% by mass) | | | Mean Thickness of Plating Layer (µm) | Red Scale Resistance | | Plating Layer Peeling Resistance | Shapability | Low-Temperature Toughness |
|---|---|---|---|---|---|---|---|---|---|---|---|
| | | | Al | Si | Others | | continuous heating | cycle heating | | | |
| Comparative Example | 51 | A1 | balance | 9.0 | - | 1.8 | X | X | Θ | ○ | ○ |
| | 52 | A1 | balance | 9.0 | - | 22 | ○ | ○ | X | ○ | ○ |
| | 53 | A1 | balance | 9.0 | - | 75 | ○ | ○ | X | ○ | ○ |
| | 54 | A2 | balance | 9.0 | - | 21 | X | X | Θ | ○ | ○ |
| | 55 | A2 | balance | 9.0 | - | 24 | ○ | ○ | X | ○ | ○ |
| | 56 | A2 | balance | 9.0 | - | 58 | ○ | ○ | X | ○ | ○ |
| | 57 | B1 | balance | 9.0 | - | 60 | ○ | ○ | X | ○ | X |
| | 58 | B2 | balance | 9.0 | - | 7.2 | ○ | ○ | Θ | X | X |
| | 59 | B3 | balance | 9.0 | - | 18 | ○ | ○ | ○ | X | X |
| | 60 | B4 | balance | 9.0 | - | 19 | ○ | ○ | ○ | X | X |
| | 61 | B5 | balance | 9.0 | - | 11 | X | X | Θ | ○ | ○ |
| | 62 | B6 | balance | 9.0 | - | 20 | ○ | ○ | ○ | X | X |

| | | | | | | | | | | | |
|---|---|---|---|---|---|---|---|---|---|---|---|
| Underlined: falling outside the scope of the invention. | | | | | | | | | | | |

As known from Table 2, the examples of the invention in which the mean thickness of the Al-base plating layer falls within a range of from 3 to 20 µm were all excellent in the red scale resistance and the plating layer peeling resistance. In particular, those in which the mean thickness of the plating layer was less than 15 µm exhibited more excellent peeling resistance.

As opposed to these, Nos. 51 and 54 of comparative examples were poor in the red scale resistance since the mean thickness of the Al-base plating layer therein was too small. Nos. 52, 53, 55, 56 and 57 were poor in the plating layer peeling resistance since the mean thickness of the Al-base plating layer was larger than 20 µm. Of those, No. 57 was poor in the low-temperature toughness since the Ti content of the substrate steel sheet was too large. No. 58 and No. 59 were poor in the shapability and the low-temperature toughness since the Cr content of the substrate steel sheet in the former was too large and the Mo content of the substrate steel sheet in the latter was too large. No. 60 was poor in the low-temperature toughness since the Si and Mn content of the substrate steel sheet therein was too large. No. 61 was poor in the red scale resistance since the Cr content of the substrate steel sheet therein was too small. No. 62 was poor in the shapability and the low-temperature toughness since the Cu content of the substrate steel sheet therein was too large.

## Claims

1. An Al-plated steel sheet for motorcycle exhaust gas passageway members excellent in red scale resistance, which is produced by dipping a substrate steel sheet comprising, in terms of % by mass, at most 0.02% of C, at most 1% of Si, at most 1% of Mn, from 5 to 25% of Cr, at most 0.3% of Ti and at most 0.02% of N with a balance of Fe and inevitable impurities,
in a hot-dip plating bath containing, in terms of % by mass, from 3 to 12% of Si with a balance of Al and inevitable impurities, then pulling it up, and controlling the plating amount to thereby form a plating layer having a mean thickness of from 3 to 20 µm on the surface thereof.

2. The Al-plated steel sheet for motorcycle exhaust gas passageway members excellent in red scale resistance as claimed in claim 1, wherein the steel sheet of the substrate further contains at least one of at most 0.6% of Ni, at most 0.1% of Nb, at most 0.2% of Al, at most 3% of Mo, at most 3% of Cu, at most 3% of W, at most 0.5% of V, at most 0.5% of Co and at most 0.01% of B.

3. The Al-plated steel sheet for motorcycle exhaust gas passageway members excellent in red scale resistance as claimed in claim 1 or 2, wherein the hot-dip plating bath further contains at least one of Ti, B, Sr, Cr, Mg and Zr in a total amount of at most 1%.

4. A motorcycle exhaust gas passageway member which is formed of the plated steel sheet of any of claims 1 to 3 as the constitutive material thereof and which is so designed that the plating layer thereof is kept in contact with exhaust gas and that the maximum service temperature is 400°C or higher.
